# EUROPEAN PATENT SPECIFICATION

(11) **EP 4 392 488 B1**
(45) Date of publication and mention of the grant of the patent: **30.07.2025**
(21) Application number: 22797135.5
(22) Date of filing: 26.08.2022
(51) Int. Cl.: C08K 9/06, C09C 1/30, C09C 1/40

(54) **FUNCTIONALIZED SILICA NANOPARTICLES FOR USE IN THIOLENE CURE 3D PRINTING**
FUNKTIONALISIERTE SILICA-NANOPARTIKEL ZUR VERWENDUNG BEIM THIOLENHÄRTUNGS-3D-DRUCKEN
NANOPARTICULES DE SILICE FONCTIONNALISÉES DESTINÉES À ÊTRE UTILISÉES DANS L'IMPRESSION 3D À DURCISSEMENT PAR THIOLÈNE

(30) Priority: 27.08.2021 US 202163237600 P
(43) Date of publication of application: 03.07.2024
(73) Proprietor: Nissan Chemical America Corporation, Houston, TX 77042 (US)
(72) Inventor: CARTER, Michael, Eric, Baytown, TX 77521 (US); MAGUIRE-BOYLE, Samuel, Spring, TX 77373 (US); SOUTHWELL, John, Edmond, Glen Ellyn, IL 60137 (US)
(74) Representative: V.O.
(86) International application number: PCT/US2022/041632
(87) International publication number: WO 2023/028288

(56) References cited:
- WO-A1-2021/158636
- US-A1- 2018 291 255
- US-A1- 2018 319 944
- WU JIANBING ET AL: "Surface modification of nanosilica with 3-mercaptopropyl trimethoxysilane and investigation of its effect on the properties of UV curable coatings", JOURNAL OF COATINGS TECHNOLOGY AND RESEARCH, SPRINGER NEW YORK LLC, US, vol. 10, no. 6, 4 September 2013 (2013-09-04), pages 849 - 857, XP035364557, ISSN: 1547-0091, [retrieved on 20130904], DOI: 10.1007/S11998-013-9525-Z

## Description

### Field of the Invention

This invention is in the field of colloidal nanoparticle dispersions, wherein said nanoparticles are selected from the group consisting of silica, alumina or silica aluminate nanoparticles and wherein said nanoparticles are surface-functionalized and uses therefore.

### Background of the Invention

Surface functionalized silica nanoparticles have been found to have great utility by themselves and as components of micellar solutions used in fluids to increase the amounts of oil recovered from an oil field.

See: U.S. Patent No. 10,557,078, "Brine Resistant Silica Sol", Inventor: John Southwell, issued on February 11, 2020. This patent describes brine resistant silica sols that contain an aqueous colloidal silica mixture that has been surface functionalized with at least one moiety selected from the group consisting of a monomeric hydrophilic organosilane, a mixture of monomeric hydrophilic organosilane(s) and monomeric hydrophobic organosilane(s), or a polysiloxane oligomer, wherein the surface functionalized brine resistant aqueous colloidal silica sol passes at least two of three of these brine resistant tests: API Brine Visual, 24 Hour Seawater Visual and API Turbidity Meter.

There are many different methods and techniques proposed to conduct the surface functionalization of silica nanoparticles, See: Surface Modification of Silica Nanoparticles, by Rajesh Ranian, PhD Thesis, University of Akron, 2008.

Wu et al. (J. Coat. Technol. Res. 2013, 10(6), 849-857) disclose the surface modification of nanosilica with 3-mercaptopropyltrimethoxysilane.

Surface modification of nanosized silica particles by polymer grafting is gaining attention. This can be attributed to the fact that it provides a unique opportunity to engineer the interfacial properties of these modified particles; at the same time the mechanical and thermal properties of the polymers can be improved. Controlled free radical polymerization is a versatile technique which affords control over molecular weight, molecular weight distribution, architecture and functionalities of the resulting polymer. Three commonly used controlled free radical polymerizations include nitroxide- mediated polymerization (NMP), atom transfer radical polymerization (ATRP) and reversible addition fragmentation transfer (RAFT) polymerization. ATRP and RAFT polymerization were explored in order to modify the silica surface with well-defined polymer brushes.

Certain surface modified nanoparticles are currently used in UV-curable materials including 3D Printing.

What is needed are different surface functionalized silica nanoparticles which can be used for different end uses.

### Summary of the Invention

The first aspect of the instant claimed invention is a colloidal nanoparticle dispersion, wherein said nanoparticles are selected from the group consisting of silica, alumina or silica aluminate nanoparticles and wherein said nanoparticles are surface-functionalized with a combination of gamma-Mercaptopropyl trimethoxysilane and a hydrophobic organosilane or combination of hydrophobic organosilanes, wherein the hydrophobic organosilane is selected from the group consisting of methacryloxytrimethoxysilane, hexamethyldisiloxane, hexamethyldisilazane, phenyltrimethoxysilane, trimethylchlorosilane, butvldimethylchlorosilane, octyldimethylchlorosilane, vinyltrimethoxysilane. vinyltriethoxysilane, *p*-tolyltrimethoxysilane, *n*-butyltrimethoxysilane, propyltrimethoxysilane, ethyltrimethoxysilane, methyltrimethoxysilane, trimethylmethoxysilane, 11-(chlorodimethylsilyl)methyl tricosane, 13-(chlorodimethylsilylmethyl) heptacosane, cyclohexylmethyl dimethoxysilane, and octadecyltrimethoxysilane.

Also disclosed is the colloidal nanoparticle dispersion of the first aspect of the instant claimed invention wherein said nanoparticles are functionalized with a combination of gamma-Mercaptopropyl trimethoxysilane and a hydrophilic organosilane or combination of hydrophilic organosilanes.

The further aspect of the instant claimed invention is the use of the colloidal nanoparticle dispersion of the first aspect of the instant claimed invention in resin formulations used in Thiolene-cure UV-curable materials.

### Detailed Description of the Instant Claimed Invention

In an embodiment, the nanoparticles used in the instant claimed invention can be comprised of substances including, without limitation, silica, alumina or silica aluminate nanoparticles.

Nanoparticles where the nanoparticles comprise silica, alumina or silica aluminate nanoparticles are available commercially from
Nissan Chemical America Corporation
10333 Richmond Avenue, Suite 1100
Houston, TX 77042

The silica nanoparticles are sourced from all forms of precipitated SiO₂ including, but not limited dry silica; fumed silica; colloidal silica and precipitated silica.

The silica particles included in the colloidal silica may have any suitable average diameter. As used herein, the average diameter of silica particles refers to the average largest cross-sectional dimension of the silica particle. In an embodiment, the silica particles may have an average diameter of between 0.1 nm and 100 nm. In an embodiment, the silica particles may have an average diameter of between 1 nm and 100 nm. In an embodiment, the silica particles may have an average diameter of between 5 nm and 100 nm. In an embodiment, the silica particles may have an average diameter of between 1 nm and 50 nm. In an embodiment, the silica particles may have an average diameter of between 5 nm and 50 nm. In an embodiment, the silica particles may have an average diameter of between 1 nm and 40 nm. In an embodiment, the silica particles may have an average diameter of between 5 nm and 40 nm. In an embodiment, the silica particles may have an average diameter of between 1 nm and 30 nm. In an embodiment, the silica particles may have an average diameter of between 5 nm and 30 nm. In an embodiment, the silica particles may have an average diameter of between 7 nm and 20 nm.

In an embodiment, the silica particles have an average diameter of less than or equal to 30 nm. In another embodiment, the silica particles may have an average diameter of less than or equal to 25 nm. In another embodiment, the silica particles may have an average diameter of less than or equal to 20 nm. In another embodiment, the silica particles may have an average diameter of less than or equal to 15 nm. In another embodiment, the silica particles may have an average diameter of less than or equal to 10 nm. In another embodiment, the silica particles may have an average diameter of less than or equal to 7 nm. In another embodiment, the silica particles may have an average diameter of at least 5 nm. In another embodiment, the silica particles may have an average diameter of at least 7 nm. In another embodiment, the silica particles may have an average diameter of at least 10 nm. In another embodiment, the silica particles may have an average diameter of at least 15 nm. In another embodiment, the silica particles may have an average diameter of at least 20 nm. In another embodiment, the silica particles may have an average diameter of at least 25 nm. Combinations of the above-referenced ranges are also possible.

Colloidal silica is a flexible technology medium, allowing for customized surface treatment based on application.

The following moieties can be used to functionalize silica nanoparticles to make the nanoparticles function as effective modifiers for UV-curable Thiolene or alternately named Thiolene Resins used in 3D Printing.

Gamma-mercaptopropyltrimethoxysilane ("GMPTMS") is available commercially as Silquest^{™} A-189 from Momentive Performance Materials. GMPTMS provides improvement in mineral-filled elastomer properties, including modulus, tensile and tear strength, heat buildup, abrasion resistance, resilience, compression set and cure time. GMPTMS Silane chemically bonds reinforcing minerals such as silica, clay, mica and talc to the polymer matrix. GMPTMS is also well known as an "adhesion promoter" used in "inner primary coatings" applied to optical fiber.

Gamma-mercaptopropyltriethoxysilane and Gamma-mercaptopropyltributoxysilane can also be used to surface functionalize the nanoparticles.

Techniques suitable for preparing surface functionalized nanoparticles are well known in the art of nanoparticle technology.

Disclosed herein are silica, alumina and/or silica aluminate nanoparticles that are surface functionalized by exposure to GMPTMS or other mercapto-functional organosilanes. These surface functionalized nanoparticles are then the dispersed phase of colloidal dispersions having available mercapto surface functionality.

In accordance with the invention, silica, alumina and silica aluminate nanoparticles are surface functionalized by exposure to a combination of GMPTMS and a hydrophobic organosilane or combination of hydrophobic organosilanes. These surface functionalized nanoparticles are then included in colloidal dispersions.

Hydrophobic organosilanes are selected from consisting of
Methacryloxytrimethoxysilane, Hexamethyldisiloxane, Hexamethyldisilazane, Phenyltrimethoxysilane, Trimethylchlorosilane, Butyldimethylchlorosilane, Octyldimethylchlorosilane, Vinyltrimethoxysilane, Vinyltriethoxysilane, p-Tolyltrimethoxysilane, n-Butyltrimethoxysilane, Propyltrimethoxysilane, Ethyltrimethoxysilane, Methyltrimethoxysilane, Trimethylmethoxysilane, 11-(Chlorodimethylsilyl)methyl Tricosane, 13-(Chlorodimethylsilylmethyl)Heptacosane, Cyclohexylmethyl Dimethoxysilane, and Octadecyltrimethoxysilane. These materials are commercially available.

Also disclosed herei are silica, alumina or silica aluminate nanoparticles are surface functionalized by exposure to a combination of GMPTMS and a hydrophilic organosilane or combination of hydrophilic organosilanes. These surface functionalized nanoparticles are then the dispersed phase of colloidal dispersions having combined mercapto functionality and hydrophobicity.

Hydrophilic organosilanes include, but are not limited to:
Aminopropyltrimethoxysilane, Aminoethylaminopropyl trimethoxysilane, Aminoethylaminoethylaminopropyl trimethoxysilane, Mercaptopropyltrimethoxysilane, 2-Cyanoethyltriethoxysilane, 2-Cyanoethyltrimethoxysilane, N-(Triethoxysilylpropyl)-o-Polyethyleneoxide Urethane, N-(3-Triethoxysilylpropyl)-4,5-Dihydro Imidazole, (3-Trimethoxysilylpropyl)Diethylene Triamine, and N-Trimethoxysilylpropyl, N,N,N,-Trimethyl Ammonium Chloride. These materials are commercially available. These surface functionalized nanoparticles are then the dispersed phase of colloidal dispersions having combined mercapto functionality and hydrophilicity.

A further aspect of the instant claimed invention is the use of the colloidal nanoparticle dispersions of the first aspect of the instant claimed invention for formulations used in Thiolene-cure 3D printing. Formulations for Thiolene-cure 3D printing resins are described and claimed in "Thiol-Ene Printable Resins For Inkjet 3D Printing", US 2020/0123301 A1, published on April 23, 2020.

It has been found that when the silica, alumina and silica aluminate nanoparticles that have been surface functionalized by exposure to a combination of GMPTMS and a hydrophobic organosilane or combination of hydrophobic organosilanes or optionally a hydrophilic organosilane or combination of hydrophilic organosilanes are added to a known Thiolene-cure printing resins, that the performance of the items made by the resin is improved. This improvement is the observation of a reduction in the obnoxious odor of the Thiolene-cure printing resins.

It is believed, but not intended to be bound thereby, that functionalized silica nanoparticles work as a crosslinker and nanofiller in Thiolene cure systems. Mercapan functional groups are able to participate in the polymerization step of Thiolene UV curable systems. A multi-Mercapto functional nanosilica particle has the ability to act as a SH-functional crosslinker in this fashion.

It is known that traditional mercapto-functional organic materials suffer in commercial application due to a strong sulfurous odor. Attaching the mercapto functionality to a nanoparticle has the ability to render the mercapto functional component of Thiolene cure systems relatively odor-free. As small molecule organic mercaptan-containing molecules (Thiols) have an appreciable vapor pressure at room temperature, small amounts can evaporate from open containers and be detected by the human nose. In the case of mercaptans/Thiols, their extremely unpleasant odor makes commercialization of Thiolene cure systems difficult as customer acceptance levels can be very low.

In contrast, most colloidal particles in dispersion are large enough in molecular weight that they do not have an appreciable vapor pressure at ambient conditions. Therefore covalent attachment of mercaptan/Thiol organic functionality to a colloidal nanoparticle has the potential to significantly if not completely remove the evaporation potential of these small molecule mercaptan/Thiol molecules.

Furthermore these new nanoparticle species have mercaptan/Thiol chemical functionality that is not diminished in its capacity to participate in Thiolene cure in a polymerizable mixture.

### Examples

To determine a suitable starting colloidal material for surface functionalization of different aqueous and solventborne nanoparticle dispersions (available from Nissan Chemical America Corporation) using Mercaptopropyl Trimethoxysilane a screening study was designed where small 10-15mL mixtures were prepared at room temperature and observed at various time intervals for stability (Table 1):

| | | | | | Vial Testing | |
|---|---|---|---|---|---|---|
| Silicasol | Dispersant | Silicasol initial pH | Average size, nm | Surface Charge | g Silicasol | g MPTMS |
| ST-O | Water | 3 | 12-15 | negative | 10.0291 | 0.67340 |
| ST-32C | Water | 10 | 12-15 | negative | 10.0139 | 0.71800 |
| ST-O-40 | Water | 3 | 20-25 | negative | 10.0425 | 0.53190 |
| ST-40 | Water | 10 | 20-25 | negative | 10.0469 | 0.88890 |
| ST-C | Water | 9 | 12-15 | negative | 10.0163 | 0.43440 |
| ST-AK | Water | 5 | 12-15 | positive | 10.0499 | 0.40100 |
| MT-ST | Methanol | 3 | 12-15 | negative | 10.013 | 0.66780 |
| MEK-ST | MEK | 3 | 12-15 | negative | 10.0049 | 0.66330 |
| IPA-ST | Isopropanol | 3 | 12-15 | negative | 10.0063 | 0.67400 |
| PGM-ST | Propylene Glycol Monomethyl Ether | 3 | 12-15 | negative | 10.0055 | 0.66970 |
| EG-ST | Ethylene Glycol | 9 | 12-15 | negative | 10.014 | 0.44550 |

| Screening | study observations: | | | | | |
|---|---|---|---|---|---|---|
| Silicasol | Initial | 10 min | 24hr | 48hr | 7 days | |
| ST-O | hazy/opalescent | opalescent | gelled solid | - | | |
| ST-32C | hazy/opalescent | gelled solid | - | - | | |
| ST-O-40 | hazy/opalescent | opalescent | gelled solid | - | | |
| ST-40 | hazy/opalescent | gelled solid | - | - | | |
| ST-C | hazy/opalescent | hazy/opalescent | hazy/some gels | p milky/more gels | present | |
| ST-AK | hazy/opalescent | hazy/opalescent | gelled solid | - | | |
| MT-ST | hazy/opalescent | opalescent | opalescent | opalescent | STABLE | |
| MEK-ST | hazy/opalescent | opalescent | opalescent | opalescent | STABLE | |
| IPA-ST | hazy/opalescent | opalescent | opalescent | opalescent | STABLE | |
| PGM-ST | hazy/opalescent | opalescent | opalescent | opalescent | STABLE | |
| EG-ST | some haziness | clear | clear | gelled solid | | |

It was observed that aqueous colloidal dispersions were unstable at room temperature independent of variables such as pH, average particle size, or surface charge. Surprisingly, however, most colloidal dispersions in organic solvent were found to be stable.

### Examples

### Synthesis of Colloidal silica surface-functionalized with a combination of Mercapto functional and Hydrophobic organosilanes:

### Example 1

A 1574.8g portion of MT-ST (Methanol dispersion, 30wt% colloidal silica dispersed average particle size 12-15nm) was added to a 3L, 4-neck reaction flask equipped with 500mL addition funnel and stirrer (trifoil blades, 1" diameter). To the addition funnel was added a mixture of 220.4g Mercaptopropyltrimethoxysilane (Millipore Sigma) and 204.8g Hexamethyldisiloxane (Millipore Sigma). A heating mantle was assembled to the reaction flask and stirring activated at 200rpm. Heating mantle was activated and MT-ST was brought to 55°C. The organosilane mixture was fed to the reaction at 2 drops per second until addition was complete. The reaction was held at 55°C for a period of 3 hours, then allowed to cool to room temperature.

### Testing to determine relative odor levels of Thiolene functional materials:

Dräger Tube testing (see Handbook for Dräger-Tubes and MicroTubes 20th edition, as posted on Dräger sampling tubes and systems | Draeger) was used to test for residual Mercaptan odorants. Testing was performed using Dräger tube product 20/a (20-100ppm), and product 0.25-6 ppm to measure residual mercaptans (available from Dräger US).

Nalgene bottles (4oz/125mL) were filled with 50mL test solution and sealed with aluminum foil. Test solutions were allowed to release residual mercaptan odorants into bottle headspace at 22°C (room temperature) for a period of 1 hour. The tip of each Dräger tube was inserted into bottle headspace through aluminum foil and a reading for residual mercaptans in bottle headspace was taken.

### Test solutions:

Example 1
   and
Comparative Examples
   a) non-functionalized MT-ST (colloidal silica dispersed in Methanol, available from Nissan Chemical America Corp.),
   b) control example Isobornyl Acrylate (Sigma Aldrich),
   c) Pentaerythritoltetrakis (3-Mercaptopropionate) (Sigma Aldrich), and
   d) control example Mercaptopropyl Trimethoxysilane (Sigma Aldrich).

It was found that relatively high levels of residual mercaptan odorants were found in the bottle headspace of Control Example D Mercaptopropyl Trimethoxysilane (40ppm) and Example C Pentaerythritol Tetrakis (3-Mercaptopropionate) (25ppm). The latter substance is a standard monomer used in current UV-Curable Thiolene materials including 3D Printing materials.

Relatively low levels of residual bottle headspace mercaptans were found in Example A (2ppm) and control samples Example b) Isobornyl Acrylate (0ppm) and Example 1) MT-ST (0ppm).

These test results confirm that mercaptan covalent attachment to surfaces of silica nanoparticles results in very low levels of small molecule mercaptans detectable, and therefore resulting odor levels will be lower.

### Odor Panel Testing- Testing to determine relative odor levels of Thiolene functional materials using an "Odor Panel for testing":

A group of seven people was assembled to smell inventive and comparative examples and control samples. Test subjects were instructed to smell samples in a safe manner and to assign a number to each test sample according to how repulsive or foul smelling they perceived each sample to be, with a score of 0 corresponding to "no odor or no repulsive/foul odor" and a score of 10 corresponding to an extremely repulsive/foul odor.

Samples tested were Example 1 (MT-ST surface functionalized with Mercaptopropyltrimethoxysilane), unmodified MT-ST, Mercaptopropyltrimethoxysilane (procured from Millipore Sigma), Trimethylolpropane Trismercaptopropionate (a standard organic ThiolEne monomer, no nanoparticles procured from Millipore Sigma), and Isobornyl Acrylate (a typical UV-curable monomer, no nanoparticle or mercaptan groups contained therein, Miramer M1140 procured from Miwon USA). Raw scores with average and standard deviation values are shown in the below table:

| | Example1 | MT-ST | Mercaptopropyl Trimethoxysilane | Trimethylolpropane Trismercaptopropionate | Isobornyl Acrylate |
|---|---|---|---|---|---|
| 1 | 2 | 0 | 10 | 10 | 1 |
| 2 | 1 | 0 | 10 | 10 | 0 |
| 3 | 1 | 0 | 10 | 10 | 1 |
| 4 | 1 | 0 | 10 | 9 | 0 |
| 5 | 1 | 0 | 10 | 10 | 2 |
| 6 | 1 | 0 | 10 | 10 | 0 |
| 7 | 2 | 0 | 10 | 9 | 1 |
| avg | 1.29 | 0.00 | 10.00 | 9.71 | 0.71 |
| std dev | 0.49 | 0.00 | 0.00 | 0.49 | 0.76 |

It can be concluded from Odor Panel testing that both raw Mercaptopropyl Trimethoxysilane and standard Thiolene organic monomer Trimethylolpropane Trismercaptopropionate have a very high average score corresponding to a very repulsive/foul odor level.

This confirms the inventors experience and Dräger Tube testing results of current typical Thiolene materials and mercapto-functional organosilane before attachment to a nanoparticle surface.
It can also be seen that Example 1 (MT-ST nanosilica surface functionalized with mercaptopropyl trimethoxysilane), MT-ST with no added surface functionality(unmodified MT-ST), and Example b) Isobornyl Acrylate all have very low odor scores.

In the case of Example 1 this low score result confirms both Dräger Tube testing and the inventors belief that attachment of mercapto surface functionality to the nanosilica surface removes the source of the odor problem: small molecule mercaptan molecules that are available to enter the air and be detected by the human nose.

### Ability to form a UV curable film

A test formulation was prepared with Example 1 to confirm the ability to form a UV curable film: Into a 250mL Nalgene bottle was weighed 62g Example 1, 25g Tricyclodecanedimethanol Diacrylate (Miramer M262 available from Miwon USA), 10g Isobornyl Acrylate (Miramer M1140 available from Miwon USA), 1g Irgacure^{®}184 (1-Hydroxycyclohexyl phenyl ketone available from Millipore Sigma), and 2 g Diphenyl (2,4,6 trimethylbenzoyl) phosphine oxide available from Millipore Sigma. Formulation was mixed thoroughly at room temperature until all photoinitiators were properly dissolved.

A 10mil liquid film drawdown was prepared from this formulation using a wire-wound Mayer rod corresponding to a 6mil wet coating thickness. Solvent from the formulation was allowed to evaporate at room temperature for a period of 2 minutes in a laboratory fume hood, followed by exposure to 1000mJ/cm² UV light from a CRL UV240 Compact AC UV Curing Lamp available from CR Laurence Inc. After UV exposure the cured film was dry and tack-free confirming the ability to form a cured Thiolene film.

## Claims

1. A colloidal nanoparticle dispersion, wherein said nanoparticles are selected from the group consisting of silica, alumina or silica aluminate nanoparticles and wherein said nanoparticles are surface-functionalized with a combination of gamma-Mercaptopropyl trimethoxysilane and a hydrophobic organosilane or combination of hydrophobic organosilanes, wherein the hydrophobic organosilane is selected from the group consisting of methacryloxytrimethoxysilane, hexamethyldisiloxane, hexamethyldisilazane, phenyltrimethoxysilane, trimethylchlorosilane, butyldimethylchlorosilane, octyldimethylchlorosilane, vinyltrimethoxysilane, vinyltriethoxysilane, p-tolyltrimethoxysilane, n-butyltrimethoxysilane, propyltrimethoxysilane, ethyltrimethoxysilane, methyltrimethoxysilane, trimethylmethoxysilane, 11-(chlorodimethylsilyl)methyl tricosane, 13-(chlorodimethylsilylmethyl) heptacosane, cyclohexylmethyl dimethoxysilane, and octadecyltrimethoxysilane.

2. The use of the colloidal nanoparticle dispersion of Claim 1 in resin formulations used in Thiolene-cure UV-curable materials.

## Patentansprüche

1. Kolloidale Nanopartikeldispersion, wobei die Nanopartikel ausgewählt sind aus der Gruppe bestehend aus Kieselsäure-, Aluminiumoxid-oder Kieselsäurealuminat-Nanopartikeln, und wobei die Nanopartikel mit einer Kombination aus Gamma-Mercaptopropyltrimethoxysilan und einem hydrophoben Organosilan oder einer Kombination aus hydrophoben Organosilanen oberflächenfunktionalisiert sind, wobei das hydrophobe Organosilan ausgewählt ist aus der Gruppe bestehend aus Methacryloxytrimethoxysilan, Hexamethyldisiloxan, Hexamethyldisilazan, Phenyltrimethoxysilan, Trimethylchlorsilan, Butyldimethylchlorsilan, Octyldimethylchlorsilan, Vinyltrimethoxysilan, Vinyltriethoxysilan, *p-*Tolyltrimethoxysilan, *n*-Butyltrimethoxysilan, Propyltrimethoxysilan, Ethyltrimethoxysilan, Methyltrimethoxysilan, Trimethylmethoxysilan, 11-(Chlordimethylsilyl)methyltricosan, 13-(Chlordimethylsilylmethyl)heptacosan, Cyclohexylmethyldimethoxysilan und Octadecyltrimethoxysilan.

2. Verwendung der kolloidalen Nanopartikeldispersion nach Anspruch 1 in Harzformulierungen, verwendet in UV-härtbaren Thiolenhärtungsmaterialien.

## Revendications

1. Dispersion de nanoparticules colloïdales, dans laquelle lesdites nanoparticules sont sélectionnées parmi le groupe constitué des nanoparticules de silice, d'alumine ou d'aluminate de silice et dans laquelle lesdites nanoparticules sont fonctionnalisées en surface avec une combinaison de gamma-Mercaptopropyltriméthoxysilane et d'un organosilane hydrophobe ou une combinaison d'organosilane hydrophobes, dans laquelle l'organosilane hydrophobe est sélectionné parmi le groupe constitué de méthacryloxytriméthoxysilane, hexaméthyldisiloxane, hexaméthyldisilazane, phényltriméthoxysilane, triméthylchlorosilane, butyldiméthylchlorosilane, octyldiméthylchlorosilane, vinyltriméthoxysilane, vinyltriéthoxysilane, *p* -tolyltriméthoxysilane, *n* - butyltriméthoxysilane, propyltriméthoxysilane, éthyltriméthoxysilane, méthyltriméthoxysilane, triméthylméthoxysilane, 11-(chlorodiméthylsilyl)méthyltricosane, 13-(chlorodiméthylsilylméthyl)heptacosane, cyclohexylméthyldiméthoxysilane et octadécyltriméthoxysilane.

2. Utilisation de la dispersion de nanoparticules colloïdales selon la revendication 1 dans des formulations de résine utilisées dans des matériaux durcissables par UV à durcissement au thiolène.
